# DEMANDE DE BREVET EUROPEEN

(11) **EP 4 446 172 A1**
(43) Date de publication de la demande: **16.10.2024**
(21) Numéro de dépôt: 24163373.4
(22) Date de dépôt: 13.03.2024
(51) Int. Cl.: B60R 19/56

(54) **VÉHICULE ROUTIER DE TRANSPORT DE MARCHANDISES ÉQUIPÉ D'UN MODULE DE PARE-CHOCS ARRIÈRE**

(30) Priorité: 05.04.2023 FR 2303374
(71) Demandeur: Jean Chereau SAS, 50220 Ducey (FR)
(72) Inventeur: GOLLÉ, Fabien, 22490 PLESLIN TRIGAVOU (FR); GARNIER, Arnaud, 53190 LANDIVY (FR); GAVARD, Jean-Marc, 50870 LE PARC (FR)
(74) Mandataire: Casalonga

(57) **Abrégé**

Le véhicule routier de transport de marchandises comprend :
- une carrosserie comprenant deux flancs 16 verticaux, un pavillon et un plancher 20 assemblés entre eux et délimitant en partie un espace de chargement intérieur,
- un châssis 14 porteur fixé au plancher et supportant au moins un essieu équipé de roues, et
- un module arrière 34 de pare-chocs qui est fixé au plancher 20 qui est distinct et espacé du châssis 14 porteur, et qui comprend :
- des premier et deuxième jambages latéraux 50, 52 espacés transversalement et fixés au plancher 20, et un moyen de protection anti-encastrement 54 s'étendant transversalement et fixé aux premier et deuxième jambages latéraux 50, 52, et
- des première et deuxième platines 56, 58 solidaires chacune d'un des premier et deuxième jambages latéraux 50, 52, s'étendant transversalement et montées en appui contre l'arrière de la carrosserie 12 dans le sens longitudinal.

## Description

La présente invention concerne le domaine des véhicules routiers de transport de marchandises tels que des semi-remorques ou des remorques.

Un véhicule routier de transport de marchandises comprend un châssis et une carrosserie montée sur le châssis et délimitant un espace de chargement intérieur.

Classiquement, le châssis d'un véhicule routier comprend deux longerons longitudinaux fixés sur un plancher de la carrosserie et une pluralité de traverses s'étendant transversalement entre les longerons. On parle généralement de châssis de type échelle.

Le véhicule comprend un train roulant pour supporter la carrosserie et une plaque d'attelage fixée aux longerons du châssis pour assurer l'attelage ou le dételage à un autre véhicule, par exemple un tracteur dans le cas d'une semi-remorque. Le train roulant comprend généralement plusieurs essieux pour le support de roues et des suspensions d'essieu fixées sur les longerons du châssis.

Un véhicule routier de transport de marchandises est soumis à différentes réglementations, et notamment au règlement n°58 de la commission économique pour l'Europe des Nations unies concernant les dispositifs arrière de protection anti-encastrement.

Ce règlement régit notamment la garde au sol et les efforts longitudinaux que doit supporter la barre anti-encastrement du châssis du véhicule qui est supportée par des jambages verticaux eux-mêmes fixés sur les longerons.

Dans un châssis de type échelle, les efforts appliqués sur la barre anti-encastrement sont renvoyés dans le châssis via les longerons.

De sorte à limiter le poids à vide d'un tel véhicule routier de transport de marchandises, il est possible de prévoir un châssis porteur qui est séparé du module de pare-chocs arrière, et de la plaque d'attelage.

Pour plus de détails sur la conception d'un tel châssis porteur on pourra par exemple se référer au brevet FR-B1-3 052 135 de la demanderesse.

Ce type de véhicule routier de transport de marchandises doit aussi pouvoir supporter les efforts réglementaires applicables sur la barre anti-encastrement.

La présente invention vise à proposer un véhicule routier de transport de marchandises présentant un poids réduit par rapport à un véhicule équipé d'un châssis de type échelle, et conçu pour supporter les efforts réglementaires applicables sur les dispositifs arrière de protection anti-encastrement.

L'invention a pour objet un véhicule routier de transport de marchandises comprenant une carrosserie comprenant deux flancs verticaux, un pavillon et un plancher assemblés entre eux et délimitant en partie un espace de chargement intérieur, un châssis porteur fixé au plancher de la carrosserie et supportant au moins un essieu équipé de roues, et un module arrière de pare-chocs qui est fixé au plancher de la carrosserie et qui est distinct et espacé du châssis porteur.

Selon une caractéristique générale, le module arrière de pare-chocs comprend des premier et deuxième jambages latéraux espacés transversalement et fixés au plancher de la carrosserie, et un moyen de protection anti-encastrement s'étendant transversalement et fixé aux premier et deuxième jambages latéraux.

Selon une autre caractéristique générale, le module arrière comprend des première et deuxième platines solidaires chacune d'un des premier et deuxième jambages latéraux, s'étendant transversalement et montées en appui contre l'arrière de la carrosserie dans le sens longitudinal.

Par « platine solidaire d'un jambage », on entend que la platine est fixée au jambage associé. La platine peut être une pièce rapportée sur le jambage associé. Alternativement, la platine peut être réalisée d'une seule pièce avec le jambage.

Selon encore une autre caractéristique générale, le module arrière comprend des premier et deuxième moyens de fixation pour fixer respectivement les première et deuxième platines sur la carrosserie.

Les sens « longitudinal » et « transversal » sont utilisés en considérant le sens de la longueur de la carrosserie.

Lorsque des efforts longitudinaux sont exercés depuis l'arrière sur le moyen de protection anti-encastrement du module arrière, une partie des efforts est transmise par les jambages latéraux aux flancs de la carrosserie via le plancher. Ceci assure une bonne reprise des efforts verticaux transmis par les jambages latéraux dans la mesure où les flancs de la carrosserie sont relativement rigides du fait de leur hauteur. Plus l'entraxe transversal est important entre les jambages latéraux, plus on favorise la reprise par les flancs de la carrosserie.

En outre, une partie des efforts exercés sur le moyen de protection anti-encastrement est aussi transmise par les platines au plancher de la carrosserie. Chaque platine forme un moyen de renvoi au plancher des efforts dans le sens longitudinal.

De préférence, chacun des premier et deuxième jambages latéraux du module arrière de pare-chocs est fixé sur une zone d'extrémité latérale du plancher de la carrosserie contre laquelle est fixé l'un des flancs verticaux de la carrosserie. Cette disposition favorise encore la reprise par les flancs de la carrosserie des efforts transmis par les jambages latéraux.

Chacun des premier et deuxième jambages latéraux du module arrière de pare-chocs peut être décalé au moins en partie vers l'extérieur par rapport aux extrémités latérales du moyen de protection anti-encastrement.

Le châssis porteur peut comprendre deux poutres latérales s'étendant longitudinalement, chacun des premier et deuxième jambages latéraux du module arrière de pare-chocs étant de préférence décalé vers l'extérieur par rapport à la poutre latérale du châssis porteur située du même côté d'un des flancs verticaux de la carrosserie.

Dans un mode de réalisation, la carrosserie comprend en outre un cadre arrière de renfort solidaire au moins des flancs et du plancher. Dans ce cas, les première et deuxième platines du module arrière de pare-chocs sont avantageusement en appui dans le sens longitudinal contre une traverse inférieure du cadre arrière.

Selon une conception particulière, les premier et deuxième moyens de fixation du module arrière de pare-chocs peuvent comprendre des premier et deuxième groupes de vis s'étendant longitudinalement à travers les première et deuxième platines et dans la traverse inférieure du cadre arrière. Alternativement ou en combinaison, les premier et deuxième moyens de fixation peuvent comprendre de la colle.

Chacune des première et deuxième platines peut s'étendre transversalement en saillie vers l'intérieur par rapport au jambage latéral associé. Ceci permet d'accroitre encore une bonne reprise des efforts.

Chacune des première et deuxième platines peut être pourvue d'une embase solidaire chacune du premier ou deuxième jambage latéral associé, et d'une plaque prolongeant verticalement l'embase et montée en appui contre l'arrière de la carrosserie dans le sens longitudinal. Chacune des première et deuxième platines peuvent ainsi présenter une forme en L.

Le module arrière de pare-chocs peut également comprendre des troisième et quatrième moyens de fixation qui s'étendent verticalement au travers des premier et deuxième jambages latéraux et dans le plancher de la carrosserie respectivement pour la fixation des premier et deuxième jambages latéraux au plancher.

Les troisième et quatrième moyens de fixation peuvent comprendre des troisième et quatrième groupe de vis. Les premier et deuxième jambages latéraux peuvent présenter des trous oblongs pour le passage des troisième et quatrième groupes de vis associés. Ainsi, il n'y a pas de reprise des efforts en cisaillement des efforts longitudinaux exercés sur le moyen de protection anti-encastrement.

Alternativement ou en combinaison, les troisième et quatrième moyens de fixation peuvent comprendre des goupilles, des goujons, etc.

Avantageusement, le module arrière de pare-chocs comprend des premier et deuxième poussoirs latéraux montés de façon coulissante respectivement par rapport aux premier et deuxième jambages latéraux. Chacun des premier et deuxième poussoirs latéraux peut supporter au moins un rouleau monté à rotation suivant un axe horizontal et destiné à venir en appui contre un quai de chargement. Le module arrière de pare-chocs peut également comprendre un élément amortisseur monté sur chaque poussoir du côté opposé audit rouleau dans le sens longitudinal. Alternativement, l'élément amortisseur associé à chaque poussoir peut être fixé sur le jambage latéral associé.

Dans une autre variante, chacun des premier et deuxième poussoirs latéraux peut supporter, en remplacement du ou des rouleaux, au moins un butoir élastique destiné à venir en appui contre un quai de chargement.

Encore dans une autre variante, le module arrière de pare-chocs peut être dépourvu des premier et deuxième poussoirs latéraux, et comprendre au moins un butoir élastique fixé sur chaque jambage latéral et destiné à venir en appui contre un quai de chargement.

Le véhicule peut comprendre en outre une unité d'attelage avant et espacée du châssis. Le véhicule peut également comprendre un module béquilles fixé au plancher de la carrosserie et espacé du châssis.

L'invention a également pour objet un module arrière pour carrosserie de véhicule routier de transport de marchandises comprenant des premier et deuxième jambages latéraux espacés transversalement et destinés à être fixés au plancher de la carrosserie, un moyen de protection anti-encastrement s'étendant transversalement et fixé aux premier et deuxième jambages latéraux, et des première et deuxième platines solidaires chacune d'un des premier et deuxième jambages latéraux, s'étendant transversalement et destinées à être montées en appui contre l'arrière de la carrosserie dans le sens longitudinal

La présente invention sera mieux comprise à la lecture de la description détaillée d'un mode de réalisation pris à titre d'exemple nullement limitatif et illustré par les dessins annexés sur lesquels :
[Fig 1] est une vue en perspective d'une semi-remorque selon un exemple de réalisation,
[Fig 2] est une vue de détail de la figure 1,
[Fig 3] est une vue de détail de la figure 1 sur laquelle des butoirs arrière ont été retiré pour des raisons de compréhension,
[Fig 4]

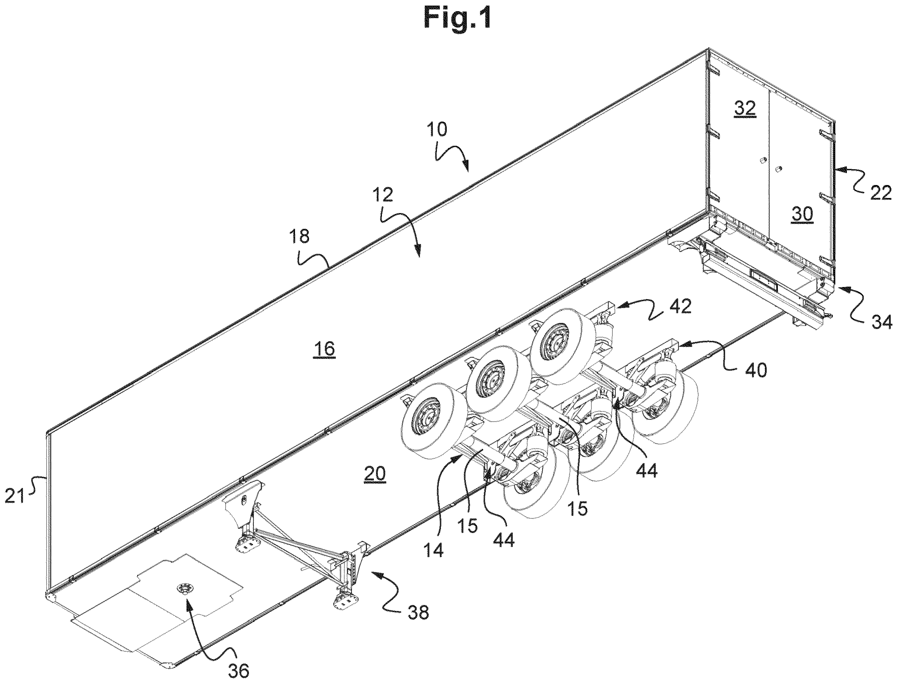

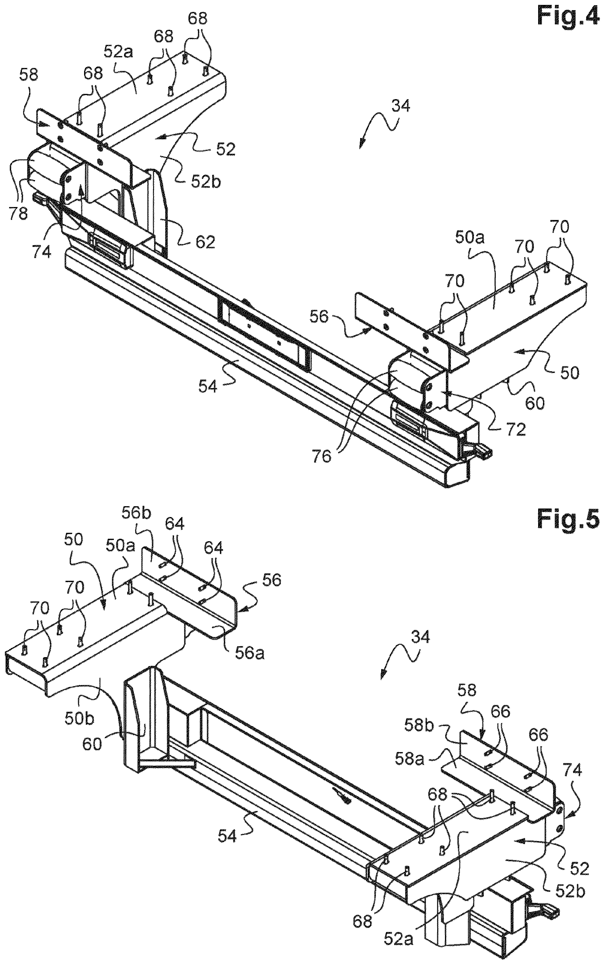

[Fig 5] sont des vues en perspective d'un module arrière de pare-chocs de la semi-remorque de la figure 1, et

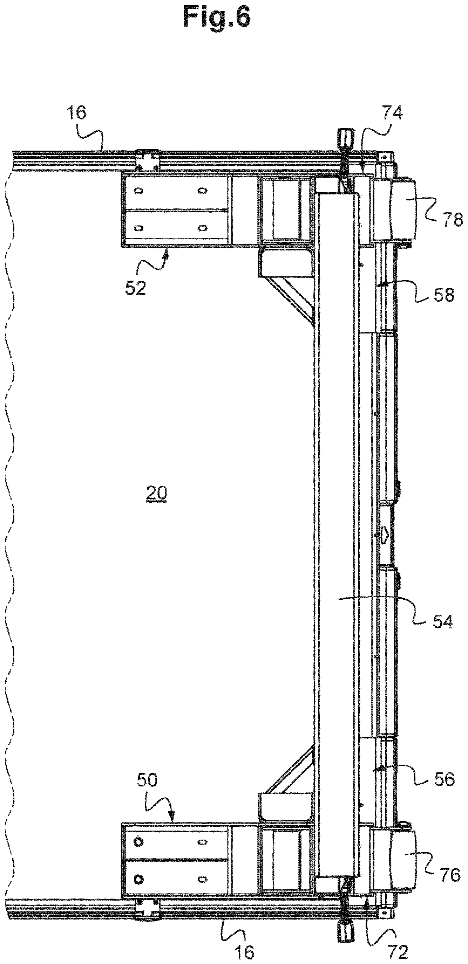

[Fig 6] est une vue partielle de dessous de la semi-remorque de la figure 1.

Sur la figure 1, on a représenté une semi-remorque, référencée 10 dans son ensemble, comprenant une carrosserie 12 et un châssis porteur 14 sur lequel est montée la carrosserie et supportant une pluralité d'essieux 15 équipés chacun de roues (non référencées).

La carrosserie 12 comprend deux flancs 16 verticaux opposés s'étendant longitudinalement (un seul étant visible sur la figure), un plafond ou pavillon 18, un fond ou plancher 20 et une face avant 21 qui sont assemblés entre eux pour délimiter un espace de chargement intérieur. Les flancs 16 sont identiques et symétriques l'un par rapport à l'autre en considérant un plan vertical médian longitudinal de la carrosserie.

La carrosserie 10 comprend également un cadre arrière 22, nommé aussi custode, ayant une fonction de rigidification de la carrosserie. Le cadre arrière 22 rigide est fixé sur les extrémités arrière des flancs 18, du pavillon 18 et du plancher 20.

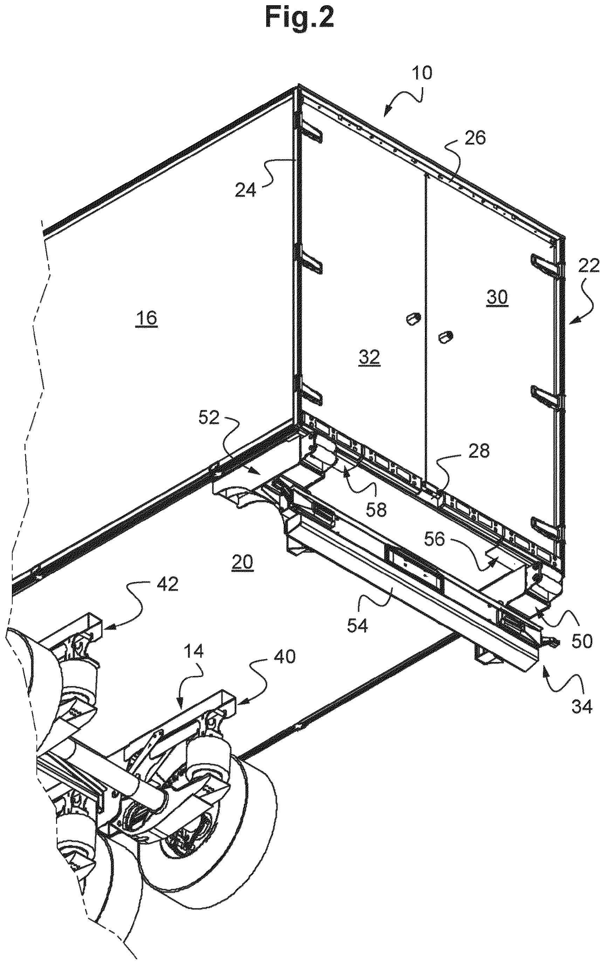

Comme illustré plus visiblement à la figure 2, le cadre arrière 22 comprend deux montants verticaux 24, une traverse supérieure 26 reliant les extrémités supérieures des montants verticaux 24, et une traverse inférieure 28 formant seuil reliant les extrémités inférieures des montants verticaux 24. Le cadre arrière 22 peut par exemple être réalisé en acier, notamment en acier inoxydable.

Dans l'exemple de réalisation illustré, la carrosserie 10 comprend également deux portes arrière 30, 32 articulées chacune à rotation sur le cadre arrière 22. Les portes arrière 30, 32 forment respectivement des portes arrière droite et gauche. Chaque porte arrière 30, 32 est articulée sur un des montants verticaux 24 du cadre arrière autour d'axes d'articulation verticaux. De sorte à permettre l'accès à l'espace de chargement intérieur, il est possible de prévoir d'autres conceptions, par exemple un rideau coulissant en remplacement des portes arrière.

Comme cela sera décrit plus en détail par la suite, la semi-remorque 10 comprend également un module arrière 34 de pare-chocs fixé au plancher 20 à l'arrière du châssis porteur 14. Le module arrière 34 est fixé au plancher 20 du côté extérieur, i.e. du côté opposé à l'espace de chargement intérieur.

En se référant de nouveau à la figure 1, la semi-remorque 10 comprend encore une unité 36 d'attelage et un module 38 béquilles fixés au plancher 20 du côté extérieur et à l'avant du châssis porteur 14. L'unité 36 permet d'assurer l'attelage ou le dételage à un tracteur (non représenté). Le module 38 béquilles permet à la semi-remorque 10 de reposer sur le sol à l'état dételé.

L'unité 36 d'attelage et le module 38 béquilles sont séparés du châssis porteur 14. Dans l'exemple de réalisation illustré, le module 38 béquilles est disposé longitudinalement entre l'unité 36 d'attelage et le châssis porteur 14. Alternativement, le module 38 béquilles et l'unité 36 d'attelage pourraient être assemblés entre eux de sorte à former un ensemble unitaire.

Dans cet exemple de réalisation, le châssis porteur 14 supporte trois essieux 15. Il est possible de prévoir un nombre différent d'essieux, par exemple un, deux ou encore quatre essieux.

Le châssis porteur 14 est fixé au plancher 20. Le châssis porteur 14 comprend des poutres 40, 42 latérales formant respectivement des poutres droite et gauche. Les poutres 40, 42 latérales sont espacées dans le sens transversal et s'étendent longitudinalement. Dans l'exemple de réalisation illustré, chaque poutre 40, 42 latérale est réalisé en plusieurs pièces espacées les unes par rapport aux autres dans le sens longitudinal.

Le châssis porteur 14 comprend également une pluralité de traverses 44 s'étendent transversalement par rapport aux poutres 40, 42 et fixées sur celle-ci. Chaque traverse 44 est située entre deux pièces successives des poutres 40, 42 latérales. Chaque traverse 44 supporte un des essieux 15. Pour plus de détails sur la conception du châssis porteur 14, on pourra se référer au brevet FR-B1-3 052 135 de la demanderesse dont le contenu concernant le châssis porteur 14 est incorporé par référence.

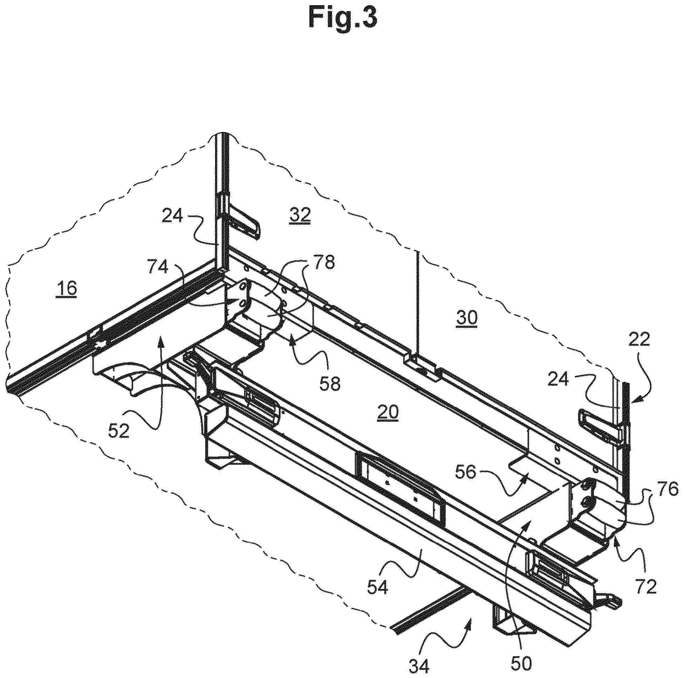

Comme illustré plus visiblement aux figures 3, 4 et 5, le module arrière 34 de pare-chocs comprend des premier et deuxième jambages latéraux 50, 52 qui forment respectivement des jambages droite et gauche.

Le module arrière 34 de pare-chocs comprend également une barre de protection anti-encastrement 54 s'étendant transversalement et fixée aux jambages latéraux 50 et 52, et des première et deuxième platines 56, 58 latérales fixées chacune sur un des jambages latéraux.

Les jambages latéraux 50, 52 sont identiques et symétriques l'un par rapport à l'autre en considérant le plan vertical médian longitudinal de la carrosserie. Les jambages latéraux 50, 52 sont espacés dans le sens transversal. Les jambages latéraux 50, 52 sont fixés au plancher 20 de la carrosserie.

Chaque jambage latéral 50, 52 comprend une partie principale 50a, 52a s'étendant longitudinalement et fixée au plancher 20 de la carrosserie, et une patte d'attache 50b, 52b prolongeant vers le bas un bord intérieur de la partie principale 50a, 52a et qui permet le support de la barre de protection anti-encastrement 54. La partie principale 50a, 52a est montée en appui contre le plancher 20. Chaque jambage latéral 50, 52 est équipé en outre d'un montant 60, 62 vertical fixé sur la partie principale 50a, 52a associée et sur lequel est fixée la barre de protection anti-encastrement 54. La barre de protection anti-encastrement 54 est fixée aux extrémités inférieures des jambages latéraux 50, 52. La barre de protection anti-encastrement 54 s'étend transversalement entre les jambages latéraux 50, 52.

Chaque platine 56, 58 est fixée sur le jambage latéral 50, 52 associé par tout moyen approprié, par exemple par mécano-soudage. Chaque platine 56, 58 est également fixée contre la traverse inférieure 28 du cadre arrière. Dans l'exemple de réalisation illustré, chaque platine 56, 58 est une pièce distincte du jambage latéral 50, 52 associé et rapportée sur celui-ci. Alternativement, la platine et le jambage latéral associé pourraient être réalisés monoblocs.

Le module arrière 34 comprend des premier et deuxième groupes de vis 64, 66 pour fixer respectivement les platines 56, 58 à la traverse inférieure 28 du cadre arrière. Les vis 64, 66 de chaque groupe s'étendent longitudinalement à travers la platine 56, 58 associée et dans la traverse inférieure 28 du cadre arrière. L'extrémité filetée de chaque vis 64, 66 est vissée dans la traverse inférieure 28.

Des trous (non référencés) sont ménagés dans chaque platine 56, 58 pour le passage des vis 64, 66. Dans l'exemple de réalisation illustré, les vis 64, 66 de chaque groupe sont au nombre de quatre et agencées par paire, les vis d'une paire étant alignées verticalement. Alternativement, il est possible de prévoir un nombre différent de vis et/ou un agencement différent.

Dans l'exemple de réalisation illustré, la fixation des platines 56, 58 à la traverse inférieure 28 est réalisée uniquement par l'utilisation des vis 64, 66 longitudinales. En variante, des vis verticales pourraient également être prévues pour fixer les platines 56, 58 à la traverse inférieure 28. En variante, il peut aussi être possible de prévoir, en remplacement ou en combinaison des vis, un collage des platines 56, 58 à la traverse inférieure 28.

Les platines 56, 58 sont identiques et symétriques l'une par rapport à l'autre en considérant le plan vertical médian longitudinal de la carrosserie. Les platines 56, 58 sont espacées dans le sens transversal. Les platines 56, 58 forment respectivement des platines 56, 58 droite et gauche.

Chaque platine 56, 58 est montée en appui contre l'arrière la traverse inférieure 28 du cadre arrière en considérant le sens longitudinal. Chaque platine 56, 58 est aussi montée en appui contre le plancher 20 de la carrosserie en considérant le sens vertical. Chaque platine 56, 58 est encore montée en appui contre un des montants verticaux 24 du cadre arrière en considérant le sens transversal. Chaque platine 56, 58 s'étend transversalement par rapport au jambage latéral 50, 52 associé. Chaque platine 56, 58 s'étend en saillie vers l'intérieur par rapport au jambage latéral 50, 52 associé en considérant le sens transversal. A titre indicatif, la partie en saillie de la platine 56, 58 peut être comprise entre 40% et 60% de la longueur totale de la platine.

Chaque platine 56, 58 est pourvue d'une embase 56a, 58a fixée sur le jambage latéral 50, 52 associé, et d'une plaque 56b, 58b prolongeant verticalement l'embase qui est montée en appui contre la traverse inférieure 28 du cadre arrière en considérant le sens longitudinal. La plaque 56b, 58b de chaque platine est montée en appui contre un des montants verticaux 24 du cadre arrière en considérant le sens transversal. Les vis 64, 66 des premier et deuxième groupes s'étendent à travers la plaque 56b, 58b de la platine associée. L'embase 56a, 58a de chaque platine est montée en appui contre le plancher 20 de la carrosserie en considérant le sens vertical. Chaque platine 56, 58 présente une structure en L. Chaque platine 56, 58 a une forme d'équerre.

Comme indiqué précédemment, les jambages latéraux 50, 52 du module arrière sont fixés au plancher 20 de la carrosserie. Le module arrière 34 comprend des troisième et quatrième groupes de vis 68, 70 pour fixer respectivement les jambages latéraux 50, 52 au plancher 20. Les vis 68, 70 de chaque groupe s'étendent verticalement à travers le jambage latéral 50, 52 associé et dans le plancher 20. L'extrémité filetée de chaque vis 68, 70 est vissée dans le plancher 20.

Des trous (non référencés) sont ménagés dans chaque jambage latéral 50, 52 pour le passage des vis. Les trous sont ici de forme oblongue. Dans l'exemple de réalisation illustré, les vis 68, 70 de chaque groupe sont au nombre de six et agencées par rangées de trois, les vis d'une rangée étant alignées longitudinalement. Alternativement, il est possible de prévoir un nombre différent de vis et/ou un agencement différent.

Dans l'exemple de réalisation illustré, la fixation des jambages latéraux 50, 52 au plancher est réalisée uniquement par l'utilisation des vis 68, 70. En variante, il peut être possible de prévoir, en combinaison des vis, un collage des jambages latéraux 50, 52 sur le plancher.

Le module arrière 34 comprend encore des premier et deuxième poussoirs 72, 74 latéraux montés de façon coulissante respectivement à l'intérieur des jambages latéraux 50, 52 associés et supportant chacun deux rouleaux 76, 78 pour l'accostage de la carrosserie contre un quai de chargement. Les poussoirs 72, 74 sont identiques et symétriques l'un par rapport à l'autre en considérant le plan vertical médian longitudinal de la carrosserie.

Chaque poussoir 72, 74 est monté coulissant à l'intérieur du jambage latéral 50, 52 associé dans le sens longitudinal. La partie principale 50a, 50b de chaque jambage latéral forme un tiroir ou fourreau à l'intérieur duquel est logé en partie le poussoir 72, 74 associé.

Les rouleaux 76, 78 de chaque poussoir sont situés en saillie à l'arrière de chaque jambage latéral 50, 52 associé. Chaque rouleau 76, 78 est monté à rotation suivant un axe de rotation horizontal. Chaque poussoir 72, 74 supporte ici deux rouleaux 76, 78. Alternativement, chaque poussoir 72, 74 pourrait supporter un unique rouleau.

Chaque poussoir 72, 74 supporte un tampon élastique (non visible) monté longitudinalement à l'opposé des rouleaux 76, 78 pour l'amortissement des chocs horizontaux lors de l'accostage de la carrosserie contre le quai de chargement.

En se référant de nouveau à la figure 2, chaque jambage latéral 50, 52 du module arrière est fixé sur une zone d'extrémité latérale du plancher 20 de la carrosserie contre laquelle est fixé le flanc 16 associé. Chaque jambage latéral 50, 52 est fixé sur le plancher 20 au plus proche du flanc 16 adjacent. Ainsi, l'entraxe transversal entre les jambages latéraux 50, 52 est maximal.

Chaque jambage latéral 50, 52 est décalé transversalement vers l'extérieur par rapport à la poutre latérale 40, 42 du châssis porteur située du même côté du flanc 16 adjacent audit jambage. Chaque jambage latéral 50, 52 est aussi décalé en partie vers l'extérieur par rapport aux extrémités libres latérales de la barre de protection anti-encastrement 54.

Lorsque des efforts longitudinaux sont exercés dans le sens longitudinal depuis l'arrière sur la barre de protection anti-encastrement 54 du module arrière, par exemple lors d'une collision avec un autre véhicule, une partie des efforts sont transmis par les jambages latéraux 50, 52 aux flancs 16 de la carrosserie via le plancher 20.

En outre, une partie des efforts longitudinaux exercés sur la barre de protection anti-encastrement 54 est aussi transmise par les platines 56, 58 à la traverse inférieure 28 du cadre arrière et au plancher 20. Les platines 56, 58 renvoient ainsi des efforts dans le sens longitudinal au plancher 20.

Par ailleurs, lors d'une mise à quai, les efforts d'accostage longitudinaux exercés sur les rouleaux 76, 78 des poussoirs sont transmis par les jambages latéraux 50, 52 et par les vis 68, 70 au plancher 20 de la carrosserie. Une autre partie des efforts d'accostage est aussi transmise par les platines 56, 58 et par les vis 64, 66 à la traverse inférieure 28 du cadre arrière et au plancher 20.

Dans l'exemple de réalisation illustré, le module arrière 34 de pare-chocs comprend une barre de protection anti-encastrement 54. Alternativement, le module arrière peut être équipé d'un autre moyen de protection anti-encastrement, par exemple un hayon élévateur.

L'invention a été illustrée à titre d'exemple sur la base d'un véhicule routier de transport du type semi-remorque. L'invention est aussi applicable à un véhicule routier du type remorque.

## Revendications

1. Véhicule routier de transport de marchandises comprenant :
- une carrosserie (12) comprenant deux flancs (16) verticaux, un pavillon (18) et un plancher (20) assemblés entre eux et délimitant en partie un espace de chargement intérieur,
- un châssis (14) porteur fixé au plancher (20) de la carrosserie et supportant au moins un essieu (15) équipé de roues, et
- un module arrière (34) de pare-chocs qui est fixé au plancher (20) de la carrosserie et qui est distinct et espacé du châssis (14) porteur,
- le module arrière (34) de pare-chocs comprenant :
- des premier et deuxième jambages latéraux (50, 52) espacés transversalement et fixés au plancher (20) de la carrosserie, et un moyen de protection anti-encastrement (54) s'étendant transversalement et fixé aux premier et deuxième jambages latéraux (50, 52),
- des première et deuxième platines (56, 58) solidaires chacune d'un des premier et deuxième jambages latéraux (50, 52), s'étendant transversalement et montées en appui contre l'arrière de la carrosserie (12) dans le sens longitudinal, et
- des premier et deuxième moyens de fixation (64, 66) pour fixer respectivement les première et deuxième platines sur la carrosserie.

2. Véhicule selon la revendication 1, dans lequel la carrosserie (12) comprend en outre un cadre arrière (22) de renfort solidaire au moins des flancs (16) et du plancher (20), les première et deuxième platines (56, 58) du module arrière de pare-chocs étant en appui dans le sens longitudinal contre une traverse inférieure (28) du cadre arrière (22).

3. Véhicule selon la revendication 2, dans lequel les premier et deuxième moyens de fixation du module arrière de pare-chocs comprennent des premier et deuxième groupes de vis (64, 66) s'étendant longitudinalement à travers les première et deuxième platines (56, 58) et dans la traverse inférieure (28) du cadre arrière (22).

4. Véhicule selon l'une quelconque des revendications précédentes, dans lequel chacune des première et deuxième platines (56, 58) s'étend transversalement en saillie vers l'intérieur par rapport au jambage latéral (50, 52) associé.

5. Véhicule selon l'une quelconque des revendications précédentes, dans lequel chacune des première et deuxième platines (56, 58) est pourvue d'une embase (56a, 58a) solidaire chacune du premier ou deuxième jambage latéral associé, et d'une plaque (56b, 58b) prolongeant verticalement l'embase et montée en appui contre l'arrière de la carrosserie (12) dans le sens longitudinal.

6. Véhicule selon l'une quelconque des revendications précédentes, dans lequel le module arrière (34) de pare-chocs comprend en outre des troisième et quatrième moyens de fixation (68, 70) qui s'étendent verticalement au travers des premier et deuxième jambages latéraux (50, 52) et dans le plancher (20) de la carrosserie respectivement pour la fixation des premier et deuxième jambages latéraux au plancher.

7. Véhicule selon la revendication 6, dans lequel les troisième et quatrième moyens de fixation comprennent des troisième et quatrième groupe de vis (68, 70).

8. Véhicule selon la revendication 7, dans lequel les premier et deuxième jambages latéraux (50, 52) présentent des trous oblongs pour le passage des troisième et quatrième groupes de vis (68, 70) associés.

9. Véhicule selon l'une quelconque des revendications précédentes, dans lequel chacun des premier et deuxième jambages latéraux (50, 52) du module arrière de pare-chocs est fixé sur une zone d'extrémité latérale du plancher (20) de la carrosserie contre laquelle est fixé l'un des flancs (16) verticaux.

10. Véhicule selon l'une quelconque des revendications précédentes, dans lequel chacun des premier et deuxième jambages latéraux (50, 52) du module arrière de pare-chocs est décalé au moins en partie vers l'extérieur par rapport aux extrémités latérales du moyen de protection anti-encastrement (54).

11. Véhicule selon l'une quelconque des revendications précédentes, dans lequel le châssis (14) porteur comprend deux poutres (40, 42) latérales s'étendant longitudinalement, chacun des premier et deuxième jambages latéraux (50, 52) du module arrière de pare-chocs étant décalé vers l'extérieur par rapport à la poutre latérale du châssis porteur située du même côté d'un des flancs (16) verticaux de la carrosserie.

12. Véhicule selon l'une quelconque des revendications précédentes, dans lequel le module arrière de pare-chocs comprend des premier et deuxième poussoirs (72, 74) latéraux montés de façon coulissante respectivement par rapport aux premier et deuxième jambages latéraux (50, 52).

13. Véhicule selon l'une quelconque des revendications précédentes, comprenant en outre une unité d'attelage (36) avant fixée au plancher de la carrosserie et espacée du châssis (14) porteur.

14. Véhicule selon l'une quelconque des revendications précédentes, comprenant en outre un module (38) béquilles fixé au plancher de la carrosserie et espacé du châssis (14) porteur.
